# EUROPEAN PATENT SPECIFICATION

(11) **EP 1 243 156 B1**
(45) Date of publication and mention of the grant of the patent: **22.08.2007**
(21) Application number: 00988842.1
(22) Date of filing: 28.12.2000
(51) Int. Cl.: H04Q 7/38

(54) **METHOD AND SYSTEM FOR TRANSMITTING CONNECTION TIME**
VERFAHREN UND SYSTEM ZUR ÜBERTRAGUNG VON VERBINDUNGSDAUER
PROCEDE ET SYSTEME POUR LA TRANSMISSION DE TEMPS DE CONNEXION

(30) Priority: 30.12.1999 FI 992830
(43) Date of publication of application: 25.09.2002
(73) Proprietor: TeliaSonera Finland Oyj, 00510 Helsinki (FI)
(72) Inventor: WALLENIUS, Niklas, FIN-01670 Vantaa (FI)
(74) Representative: Simmelvuo, Markku Kalevi
(86) International application number: PCT/FI2000/001153
(87) International publication number: WO 2001/050800

(56) References cited:
- EP-A1- 1 014 619
- WO-A1-96/17461
- WO-A1-98/48562

## Description

The invention relates to telecommunication systems. In particular, the invention relates to a method of transferring connection time in a telecommunication system in which the mobile station of the subscriber sends a service request to the connection time server connected to the telecommunication network, which copies the request further to the database and confirms the service request by sending a message to the mobile station of the subscriber, and the user replies to the confirmation message with the mobile station, after which the connection time server enters a ticket in the database indicating a successful provision of the service and sends a message informing of the succeeding of the service to the mobile station of the subscriber.

### PRIOR ART

The provision of services based on short messages is becoming common. The sending of short messages is easy to a client who has got a mobile station belonging to the global system for mobile communications (GSM, Global system for Mobile Communications).

The short message service enables one to send between mobile stations short messages that contain typically up to 160 characters. The transmission of messages does not require that the mobile station is switched on. If the mobile station cannot be reached, the message is saved to the short message service centre. The short message service centre saves the message for several days, and if the mobile station receiving the message is activated in the area of the mobile network, then the message is sent to the mobile station. Messages are being transmitted either in the area of the same cell or to other cells by means of the roaming feature of the mobile station. Short messages may be sent also to other devices, such as digital telephones or e-mail messages.

By means of the short messages, different services are implemented. Typically, a message that is often of a fixed form, is sent to the network. In the network, the message is directed to the server of the service provider, in which the content of the message is interpreted, the rights of the sender of the message are checked, and the service is implemented to the sender of the message. As a service example let it be mentioned a weather service that is located on the Netgate server and is implemented by a short message.

One specific problem becomes the transfer of connection time. The subscriber wishes to give connection time to the recipient, typically to a certain subscriber line. Often the subscriber is a person in a better financial status, e.g. a parent who wants to support the operating costs of the mobile station of his or her child.

Previously known is a solution which solves the problem in question. Previously, a person ordering connection time has visited a telephone service shop, in which the subscriber has filled in an order form of connection time. The seller of the connection time has in turn credited the telephone bill account of the recipient. The solution is not advantageous because the purchaser of the present has had to visit the shop on site.

The objective of the present invention is to eliminate or at least to alleviate the problems referred to above. The objective of the invention is also to enable the transferring of connection time easily using the possibilities provided by the short message service in such a way that the account of the mobile station of the subscriber is debited when buying connection time.

### BRIEF DESCRIPTION OF THE INVENTION

By means of the invention, the owner of the mobile station orders connection time using the short message service. The recipient of the connection time gets a message informing of a successful transaction.

The invention relates to a method in which the subscriber writes a connection time request of a fixed form in the short message. The connection time request created by the subscriber is transmitted, e.g. as an SMS message via the short message service centre and the connection time request is received in the connection time server connected to the telecommunication network. The connection time request is recognized by the connection time server and the connection time request is saved to the database. A confirmation message is sent to the subscriber in one embodiment of the invention. The subscriber reads the confirmation message, and if the information of the confirmation message is correct, then he or she sends an acknowledgement message to the connection time server. The connection time server receives and processes the confirmation message. If the subscriber still wants to send the connection time request, then a ticket is sent to the database that debits the account of the subscriber and credits the account of the recipient. In other words, a notification of the transfer of connection time is sent to a billing system in the telecommunication network. After this, the connection time server sends a notification message informing the connection time service from the connection time server to the mobile station of the recipient by means of an SMS message transmitted via the short message service centre.

Typically, a connection time request consists of the identifier of the recipient and of that of the subscriber, a greeting message, the price of the connection time and a reference number. The confirmation message consists of the identifier of the service and of a reference number. The notification message comprises a greeting message and the price of the connection time. Usually the connection time request, confirmation message and the notification of the transfer of the connection time are transmitted in a global systems for mobile communications. Also the confirmation message is transferred by means of an SMS message via the short message service centre.

A system that is needed in transferring connection time in a telecommunication systemcomprises a telecommunication network, a mobile station of the subscriber which is connected to the telecommunication network, a mobile station of the recipient which is connected to the telecommunication network, a short message service centre which is connected to the telecommunication network, a connection time server which is connected to the telecommunication network, a database which is connected to the connection time server and means for carrying out the steps of the method according to the earlier described invention.In one embodiment of the invention, a Netgate server is used as the connection time server, in which the database is usually located.

In one embodiment, the user has agreed with the telephone operator that advertisement messages can be sent to his or her mobile station. As a favour in return, the telephone bill of the user is credited once a month. At the turn of the month the advertising agency sends the following message to the user: "transfer of speech time#0405123456#30#Hi! You have received 30 advertising messages in this month. Thank you for using the service. Best regards, the advertiser". The message is handled by a method in accordance with the invention and finally the user is sent the following message: "Hi! You have received 30 advertising messages in this month. Thank you for using the service. Best regards, the advertiser. Your account will be credited with speech time of the value of 30 marks. Best regards, billing department".

As compared with prior art, the invention provides the advantages that the connection time request is transmitted as a short message (SMS). This makes it possible to provide totally new services, examples of which were briefly presented above.

### BRIEF DESCRIPTION OF THE DRAWINGS

In the following section, the invention will be described in detail by the aid of a few examples of its embodiments with reference to the accompanying drawing, in which
Fig. 1 represents one system in accordance with the invention;
Fig. 2 illustrates one flow chart of a method in accordance with the invention;
Fig. 3 represents one embodiment in accordance with the invention; and
Fig. 4 represents one embodiment in accordance with the invention.

### DETAILED DESCRIPTION OF THE INVENTION

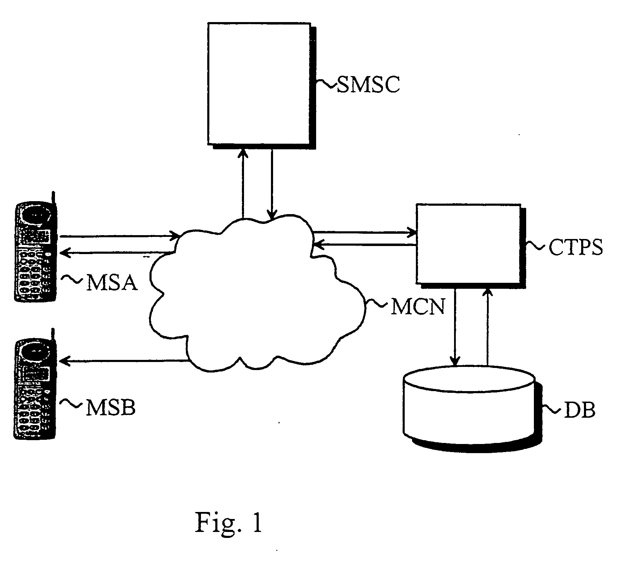

Fig. 1 represents one system in accordance with the invention. The mobile station of the subscriber MSA is connected to the short message service centre SMSC via the telecommunication network MCN. As the telecommunication network, e.g. a global system for mobile communications is used. The short message service centre SMSC is connected to the connection time server CTPS, which handles the service request sent by the subscriber. From the connection time server CTPS there is a connection to the database DB, to which information is saved relating to successful service requests, a debiting ticket which is used to debit the account of the buyer of the connection time, and a crediting ticket which credits the account of the recipient of the connection time. When the connection time request has been handled, a short message is sent from the connection time server CTPS to the mobile station MSB of the recipient of the connection time via the short message service centre SMSC.

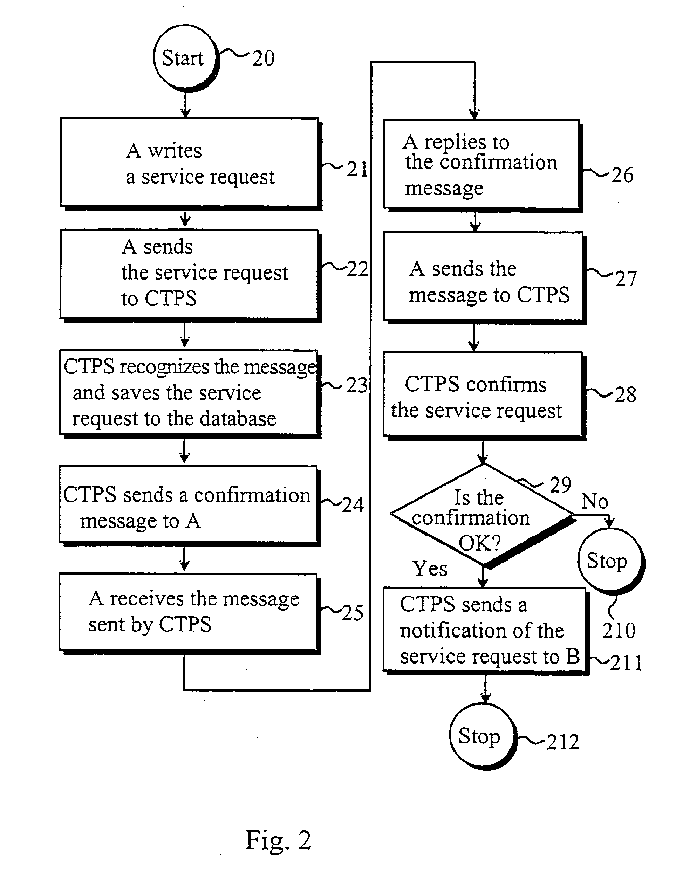

Fig. 2 illustrates one diagram of a method in accordance with the invention. At first, the subscriber writes a service request, block 21. The service request is sent via the short message service centre to the connection time server, block 22. The connection time server recognizes the service needed and saves the piece of information from the connection time card to the database, block 23. The connection time server sends a confirmation message further to the mobile station of the subscriber, block 25. The subscriber replies to the confirmation message, as shown by block 26, after which the message is sent back to the connection time server. The connection time server confirms the connection time request, and if the confirmation is correct, provides the service, block 29. The connection time server sends a notification informing of the service to the recipient of the present, block 211.

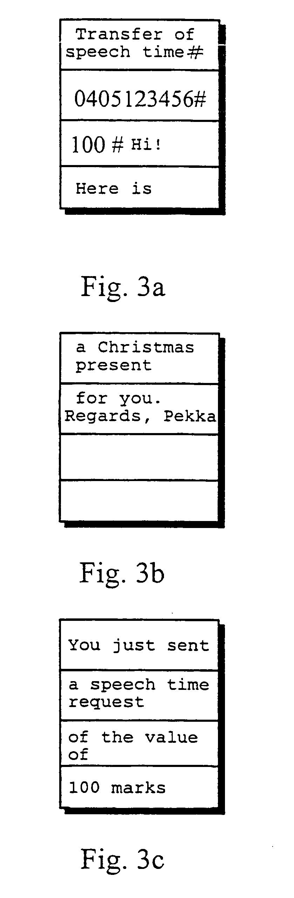

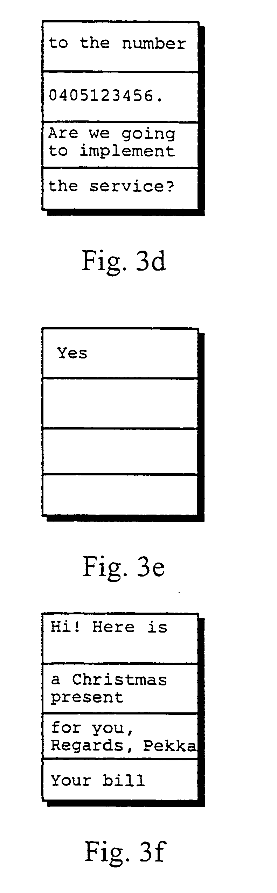

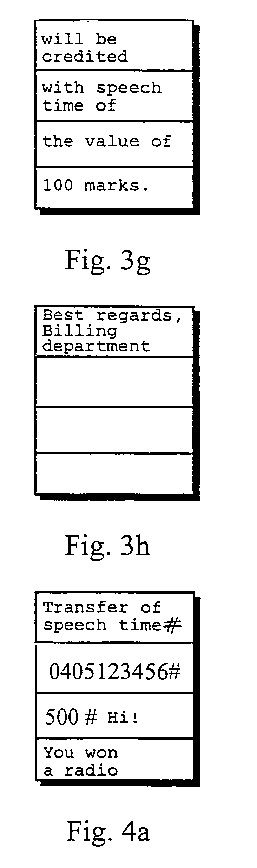

Fig. 3 represents one embodiment in accordance with the invention. Figs. 3a-3h represent the display of a mobile station. In the embodiment, a parent wishes to give his or her child connection time at the value of 100 marks as a Christmas present. For the connection time request, the parent writes a short message which is of the following form: "transfer of speech time#0405123456#100# Hi! Here is a Christmas present for you, regards, Pekka", Figs. 3a and 3b. The message is sent to the connection time server, e.g. to number 400. Next, the connection time request is confirmed, so the connection time server sends the parent a confirmation message as shown in Figs. 3c and 3d. If the parent accepts the service, he or she replies to the confirmation message by sending an acknowledgement message as shown by Fig. 3e to the connection time server. In that case, the connection time server updates the account data of the mobile stations in the database and sends a notification message to the mobile station of the recipient. The notification message is, e.g. of the following kind: "Hi! Here is a Christmas present for you, regards, Pekka. Your account will be credited with speech time of the value of 100 marks. Best regards, billing department, Figs. 3f, 3g and 3h.

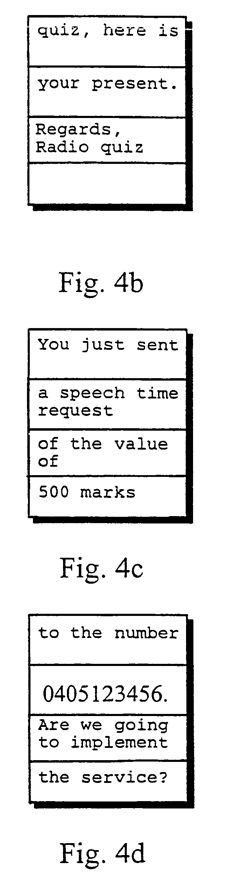

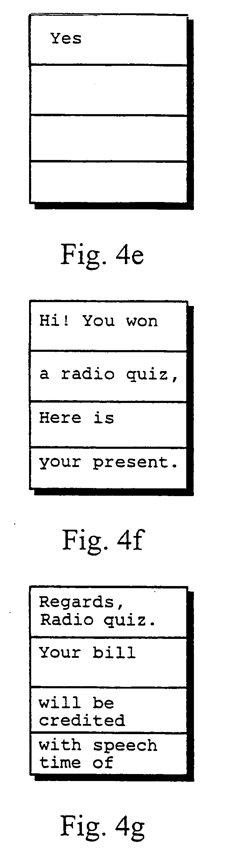

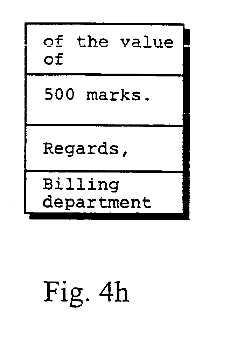

Fig. 4 represents one embodiment in accordance with the invention. In the embodiment, the user participates in a radio quiz in which the prize is speech time for the value of 500 marks. The user answers correctly the question made in the radio and wins connection time. Consequently, the organizer of the contest sends the user the prize as shown by the invention, a short message which is, e.g. of the following form: "transfer of speech time#0405123456#500#Hi! You won a radio quiz. Here is you present. Best regards, radio quiz", Figs. 4a and 4b. The message is confirmed, in which case the organizer of the contest is sent a confirmation message, Figs. 4c and 4d. The user acknowledges the confirmation message by a message as shown by Fig. 4e. Finally, the user receives a message of the following form: "Hi! You won a radio quiz. Here is you present. Best regards, radio quiz". Your account will be credited with speech time of the value of 500 marks. Best regards, billing department", Figs. 4f, 4g and 4h.

The invention is not restricted merely to examples of its embodiments referred to above, instead many variations are possible within the scope of the inventive idea defined by the claims.

## Claims

1. A method of transferring connection time in a telecommunication system, wherein the telecommunication system comprises:
a telecommunication network (MCN);
a mobile station of the subscriber (MSA) which is connected to the telecommunication network (MCN);
a mobile station of the recipient (MSB) which is connected to the telecommunication network (MCN);
a short message service centre (SMSC) which is connected to the telecommunication network (MCN);
a connection time server (CTPS) which is connected to the telecommunication network (MCN); and
a database (DB) which is connected to the connection time server (CTPS); wherein the method comprises the steps of:
receiving a connection time request created by the subscriber (MSA) in the connection time server (CTPS) by means of an SMS message transmitted via the short message service centre (SMSC);
recognizing the connection time request in the connection time server (CTPS);
saving the connection time request to the database (DB);
sending a notification of the transfer of connection time to a billing system in the telecommunication network (MCN); and
sending a notification message informing the connection time service from the connection time server (CTPS) to the mobile station of the recipient (MSB) by means of an SMS message transmitted via the short message service centre (SMSC).

2. A method as defined in claim 1, **characterised in that** the method further comprises the steps of:
sending a confirmation message from the connection time server (CTPS) to the mobile station of the subscriber (MSA);
receiving the confirmation message in the mobile station of the subscriber (MSA); and
sending the confirmation message to the connection time server (CTPS), if the subscriber accepts the confirmation message.

3. A method as defined in claim 1 or 2, **characterised in that** to the billing system, a debiting ticket is sent that is used to debit the account of the buyer of the connection time.

4. A method as defined in claim 1, 2 or 3, **characterised in that** to the billing system, a crediting ticket is sent that is used to credit the account of the recipient of the connection time.

5. A method as defined in claim 1, 2, 3 or 4, **characterised in that** the identifier of the recipient of the connection time, the price of the connection time, the identifier of the payer of the connection time, a greeting message and a reference number are attached to the connection time request.

6. A method as defined in claim 1, 2, 3, 4 or 5, **characterised in that** the identifier of the service and a reference number are attached to the confirmation message.

7. A method as defined in claim 1, 2, 3, 4, 5 or 6, **characterised in that** a greeting message and the price of the connection time are attached to the notification message.

8. A method as defined in claim 1, 2, 3, 4, 5, 6 or 7, **characterised in that** the connection time request, confirmation message and the notification message are transferred in a global system for mobile communications (GSM).

9. A method as defined in claim 1, 2, 3, 4, 5, 6, 7 or 8, **characterised in that** the confirmation message is transferred by means of an SMS confirmation message is transferred by means of an SMS message via the short message service centre (SMSC).

10. A system for the transferring of connection time in a telecommunication system, wherein the system comprises:
a telecommunication network (MCN);
a mobile station of the subscriber (MSA) which is connected to the telecommunication network (MCN);
a mobile station of the recipient (MSB) which is connected to the telecommunication network (MCN);
a short message service centre (SMSC) which is connected to the telecommunication network (MCN);
a connection time server (CTPS) which is connected to the telecommunication network (MCN);
a database (DB) which is connected to the connection time server (CTPS); and
means for carrying out the steps of the method according to any of claims 1 to 9.

11. A system as defined in claim 10, **characterised in that** the connection time server (CTPS) is a Netgate server.

12. A system as defined in claim 10 or 11, **characterised in that** the connection time server (CTPS) comprises the database (DB).

## Patentansprüche

1. Verfahren zum Übertragen bzw. Senden von Verbindungsdauer in einem Telekommunikationssystem, wobei das Telekommunikationssystem aufweist:
ein Telekommunikationsnetzwerk (MCN);
ein Mobiltelefon des Teilnehmers (MSA), welches an das Telekommunikationsnetzwerk (MCN) angeschlossen ist;
ein Mobiltelefon des Empfängers (MSB), welches an das Telekommunikationsnetzwerk (MCN) angeschlossen ist;
ein Kurzmitteilungsdienstzentrum (SMSC), welches an das Telekommunikationsnetzwerk (MCN) angeschlossen ist;
einen Verbindungsdauer-Server (CTPS), welcher an das Telekommunikationsnetzwerk (MCN) angeschlossen ist; und
eine Datenbank (DB), welche an den Verbindungsdauer-Server (CTPS) angeschlossen ist; wobei das Verfahren die folgenden Schritte aufweist:
Empfangen einer Verbindungsdaueranforderung, welche durch den Teilnehmer (MSA) in dem Verbindungsdauer-Server (CTPS) mit Hilfe einer SMS-Nachricht geschaffen ist, welche über das Kurzmitteilungsdienstzentrum (SMSC) übertragen bzw. gesendet wird;
Erkennen der Verbindungsdaueranforderung in dem Verbindungsdauer-Server (CTPS);
Speichern der Verbindungsdaueranforderung in der Datenbank (DB);
Senden einer Benachrichtigung über das Übertragen der Verbindungsdauer an ein Rechnungsstellungssystem in dem Telekommunikationsnetzwerk (MCN); und
Senden einer Benachrichtigungsnachricht, welche den Verbindungsdauerdienst informiert, von dem verbindungsdauer-Server (CTPS) zu dem Mobiltelefon des Empfängers (MSB) mit Hilfe einer SMS-Nachricht, welche über das Kurzmitteilungsdienstzentrum (SMSC) übertragen wird.

2. Verfahren nach Anspruch 1, **dadurch gekennzeichnet, dass** das Verfahren ferner die Schritte aufweist:
Senden einer Bestätigungsnachricht von dem Verbindungsdauer-Server (CTPS) an das Mobiltelefon des Teilnehmers (MSA);
Empfangen der Bestätigungsnachricht in dem Mobiltelefon des Teilnehmers (MSA); und
Senden der Bestätigungsnachricht an den Verbindungsdauer-Server (CTPS), falls der Teilnehmer die Bestätigungsnachricht akzeptiert.

3. Verfahren nach Anspruch 1 oder 2, **dadurch gekennzeichnet, dass** an das Rechnungsstellungssystem ein Belastungsticket bzw. -etikett gesendet wird, welches benutzt wird, das Konto des Käufers der Verbindungsdauer zu belasten.

4. Verfahren nach Anspruch 1, 2 oder 3, **dadurch gekennzeichnet, dass** ein Guthaben-Etikett an das Rechnungsstellungssystem gesendet wird, welches benutzt wird, den Betrag des Empfängers der Verbindungsdauer zu kreditieren.

5. Verfahren nach Anspruch 1, 2, 3 oder 4, **dadurch gekennzeichnet, dass** die Kennung des Empfängers der Verbindungsdauer, der Preis der Verbindungsdauer, die Kennung des Bezahlers der Verbindungsdauer, eine Grußnachricht und eine Referenznummer an die Verbindungsdaueranforderung angefügt werden.

6. Verfahren nach Anspruch 1, 2, 3, 4 oder 5, **dadurch gekennzeichnet, dass** die Kennung des Dienstes und eine Referenznummer an die Bestätigungsnachricht hinzugefügt werden.

7. Verfahren nach Anspruch 1, 2, 3, 4, 5 oder 6, **dadurch gekennzeichnet, dass** eine Grußnachricht und der Preis der Verbindungsnachricht an die Benachrichtigungsnachricht hinzugefügt werden.

8. Verfahren nach Anspruch 1, 2, 3, 4, 5, 6 oder 7, **dadurch gekennzeichnet, dass** die verbindungsdauer-Anforderung, die Bestätigungsnachricht und die Benachrichtigungsnachricht in einem globalen System für mobile Kommunikationen (GSM) übertragen bzw. gesendet werden.

9. Verfahren nach Anspruch 1, 2, 3, 4, 5, 6, 7 oder 8, **dadurch gekennzeichnet, dass** die Bestätigungsnachricht mit Hilfe einer SMS-Bestätigungsnachricht mit einer SMS-Nachricht über das Kurznachrichtendienstzentrum (SMSC) übertragen wird.

10. System für das Übertragen bzw. Senden von Verbindungsdauer in einem Telekommunikationssystem, wobei das System aufweist:
ein Telekommunikationsnetzwerk (MCN);
ein Mobiltelefon des Teilnehmers (MSA), welches an das Telekommunikationsnetzwerk (MCN) angeschlossen ist;
ein Mobiltelefon des Empfängers (MSB), welches an das Telekommunikationsnetzwerk (MCN) angeschlossen ist;
ein Kurzmitteilungsdienstzentrum (SMSC), welches an das Telekommunikationsnetzwerk (MCN) angeschlossen ist;
einen Verbindungsdauer-Server (CTPS), welcher an das Telekommunikationsnetzwerk (MCN) angeschlossen ist;
eine Datenbank (DB), welche an den Verbindungsdauer-Server (CTPS) angeschlossen ist; und
eine Einrichtung zum Ausführen der Schritte des Verfahrens entsprechend einem der Ansprüche 1 bis 9.

11. System nach Anspruch 10, **dadurch gekennzeichnet, dass** der Verbindungsdauer-Server (CTPS) ein Netgate- bzw. Netztor-Server ist.

12. System nach Anspruch 10 oder 11, **dadurch gekennzeichnet, dass** der Verbindungsdauer-Server (CTPS) die Datenbank (DB) aufweist.

## Revendications

1. Procédé de transfert de temps de connexion dans un système de télécommunication, ce système de télécommunication comprenant :
un réseau de télécommunication (MCN) ;
un poste mobile d'abonné (MSA) qui est connecté au réseau de télécommunication (MCN) ;
un poste mobile de destinataire (MSB) qui est connecté au réseau de télécommunication (MCN) ;
un centre de service d'envoi de messages courts (SMSC) qui est connecté au réseau de télécommunication (MCN);
un serveur de temps de connexion (CTPS) qui est connecté au réseau de télécommunication (MCN) ; et
une base de données (DB) qui est connectée au serveur de temps de connexion (CTPS) ; ce procédé comprenant les étapes de:
réception d'une requête de temps de connexion créée par l'abonné (MSA) dans le serveur de temps de connexion (CTPS) au moyen d'un message court (SMS) transmis via le centre de service d'envoi de messages courts (SMSC) ;
reconnaissance de la requête de temps de connexion dans le serveur de temps de connexion (CTPS);
sauvegarde de la requête de temps de connexion dans la base de données (DB) ;
envoi d'une notification du transfert de temps de connexion à un système de facturation dans le réseau de télécommunication (MCN) ; et
envoi d'un message de notification informant le service de temps de connexion, depuis le serveur de temps de connexion (CTPS) vers le poste mobile de destinataire (MSB), au moyen d'un message court (SMS) transmis via le service d'envoi de messages courts (SMSC).

2. Procédé selon la revendication 1, **caractérisé en ce que** ce procédé comprend en outre les étapes de :
envoi d'un message de confirmation depuis le serveur de temps de connexion (CTPS) vers le poste mobile d'abonné (MSA) ;
réception du message de confirmation dans le poste mobile d'abonné (MSA) ; et
envoi du message de confirmation au serveur de temps de connexion (CTPS), si l'abonné accepte le message de confirmation.

3. Procédé selon la revendication 1 ou 2, **caractérisé en ce qu'**au système de facturation est envoyé un ticket de débit qui est utilisé pour débiter le compte de l'acheteur du temps de connexion.

4. Procédé selon la revendication 1, 2 ou 3, **caractérisé en ce qu'**au système de facturation est envoyé un ticket de crédit qui est utilisé pour créditer le compte du destinataire du temps de connexion.

5. Procédé selon la revendication 1, 2, 3 ou 4, **caractérisé en ce que** l'identifiant du destinataire du temps de connexion, le prix du temps de connexion, l'identifiant du payeur du temps de connexion, un message d'accueil et un numéro de référence sont attachés à la requête de temps de connexion.

6. Procédé selon la revendication 1, 2, 3, 4 ou 5, **caractérisé en ce que** l'identifiant du service et un numéro de référence sont attachés au message de confirmation.

7. Procédé selon la revendication 1, 2, 3, 4, 5 ou 6, **caractérisé en ce qu'**un message d'accueil et le prix du temps de connexion sont attachés au message de notification.

8. Procédé selon la revendication 1, 2, 3, 4, 5, 6 ou 7, **caractérisé en ce que** la requête de temps de connexion, le message de confirmation et le message de notification sont transférés dans un système GSM (global system for mobile communications).

9. Procédé selon la revendication 1, 2, 3, 4, 5, 6, 7 ou 8, **caractérisé en ce que** le message de confirmation est transféré au moyen d'un SMS via le centre de service d'envoi de messages courts (SMSC).

10. Système de transfert de temps de connexion dans un système de télécommunication, ce système comprenant :
un réseau de télécommunication (MCN);
un poste mobile d'abonné (MSA) qui est connecté au réseau de télécommunication (MCN) ;
un poste mobile de destinataire (MSB) qui est connecté au réseau de télécommunication (MCN) ;
un centre de service d'envoi de messages courts (SMSC) qui est connecté au réseau de télécommunication (MCN) ;
un serveur de temps de connexion (CTPS) qui est connecté au réseau de télécommunication (MCN);
une base de données (DB) qui est connectée au serveur de temps de connexion (CTPS) ; et
des moyens d'exécution des étapes du procédé selon l'une quelconque des revendications 1 à 9.

11. Système selon la revendication 10, **caractérisé en ce que** le serveur de temps de connexion (CTPS) est un serveur Netgate.

12. Système selon la revendication 10 ou 11, **caractérisé en ce que** le serveur de temps de connexion (CTPS) comprend la base de données (DB).
